Europäisches Patentamt

European Patent Office

Office européen des brevets

(19)

(11) Numéro de publication: **0 318 428**
**A1**

## (12) DEMANDE DE BREVET EUROPEEN

(21) Numéro de dépôt: 88810752.1

(22) Date de dépôt: 04.11.88

(51) Int. Cl.⁴: **H 04 M 3/50**
**H 04 M 3/62**

(30) Priorité: 27.11.87 CH 4628/87

(43) Date de publication de la demande:
**31.05.89 Bulletin 89/22**

(84) Etats contractants désignés: **ES GR**

(71) Demandeur: **Camperio, François Joseph**
**Rue Beau-Séjour 15**
**CH-1003 Lausanne (CH)**

(72) Inventeur: **Camperio, François Joseph**
**Rue Beau-Séjour 15**
**CH-1003 Lausanne (CH)**

(74) Mandataire: **Hranitzky, Wilhelm Max et al**
**c/o WILLIAM BLANC & CIE Conseils en Propriété**
**Industrielle SA 6, rue de la Grotte**
**CH-1003 Lausanne (CH)**

(54) **Dispositif de communication.**

(57) Le dispositif comporte un poste d'émission-réception central (1) relié à une pluralité de postes de réception-émission périphériques. Le poste central comprend un écran à affichage digital (2) et un clavier (3) muni de touches alphabétiques (4) et numériques (5). Le clavier comprend également des touches (6) destinées à transmettre des informations programmées ainsi que des touches (7) d'appel des postes périphériques. Le poste central comporte en outre une mémoire-répertoire.

Les postes périphériques (10) comprennent un écran (11) destiné à l'affichage du message envoyé depuis le poste central. Un dispositif avertisseur lumineux et/ou sonore (12) est disposé sur l'écran. Des touches (13) destinées à la sélection et à l'envoi au poste central d'une réponse programmée sont disposées sur un clavier.

Le dispositif comporte encore des postes d'émission-réception intermédiaires, destinés à fonctionner comme relais entre le poste central et un poste périphérique.

FIG.1

FIG.2

EP 0 318 428 A1

**Description**

## DISPOSITIF DE COMMUNICATION

La présente invention a pour objet un dispositif de communication par affichage comportant au moins un poste d'émission-réception central relié à au moins un poste de réception-émission périphérique.

Dans toute société ou entreprise disposant d'une installation téléphonique comportant plusieurs raccordements extérieurs et une pluralité de postes téléphoniques internes, se pose le problème de comment avertir un cadre ou tout autre personne, qui se trouve déjà en communication téléphonique ou qui aurait verrouillé son poste téléphonique, qu'il y a un appel téléphonique extérieur pour lui. Dans la plupart des cas, c'est une secrétaire qui vient avertir verbalement ou à l'aide d'un petit billet la personne qui se trouve déjà en communication téléphonique et qui doit par conséquent interrompre momentanément sa communication, soit pour dire à sa secrétaire d'entrer, pour écouter ce que sa secrétaire doit lui dire ou pour prendre connaissance du message inscrit sur le billet et pour donner sa réponse, soit verbalement, soit en la griffonnant sur le billet qui lui est soumis. Si le bureau du cadre est relié à celui de sa secrétaire à l'aide d'un interphone, la secrétaire peut utiliser l'interphone pour avertir son patron. Mais dans ce cas également, la communication en cours va se trouver perturbée. De plus, l'utilisation de l'interphone peut être très gênante, car l'interlocuteur avec qui l'on est déjà en communication entend la plupart du temps très distinctement la conversation qui a lieu par interphone, si l'on ne prend pas la précaution de recouvrir le combiné avec la main.

La présente invention se propose de mettre à disposition des sociétés et autres entreprises un dispositif de communication par affichage permettant à une standardiste ou à une secrétaire d'avertir un cadre ou une autre personne qui se trouve déjà en communication téléphonique ou en situation verrouillée, qu'il y a un appel extérieur qui lui est destiné, tout en permettant à ce cadre ou à cette personne de prendre une décision et de la communiquer à la standardiste ou à la secrétaire sans interrompre ni perturber sa communication téléphonique en cours.

A cet effet, la présente invention concerne un dispositif de communication par affichage comportant au moins un poste d'émission-réception central relié à au moins un poste de réception-émission périphérique, caractérisé en ce que le poste central comporte un écran d'affichage et un clavier à touches permettant la saisie d'un message, l'écran et le clavier étant connectés à un processeur pour le traitement de l'information et à une mémoire de masse, et en ce que le poste périphérique comporte un dispositif avertisseur, pouvant être actionné depuis le poste central, un écran destiné à l'affichage du message envoyé depuis le poste central et une pluralité de touches programmées et/ou programmables destinées à envoyer une réponse au poste central.

Le dispositif peut également comporter au moins un poste d'émission-réception intermédiaire ayant les mêmes caractéristiques que le poste central, ledit poste intermédiaire étant relié d'une part au poste central et d'autre part à au moins un poste périphérique, de façon à fonctionner comme relais entre le poste central et le poste périphérique.

Le dispositif peut comporter une pluralité de postes périphériques reliés au poste central, le poste central comportant un dispositif de sélection d'appel des postes périphériques et/ou intermédiaires, chaque poste périphérique pouvant comporter une touche de déviation destinée à dévier les appels qu'il reçoit sur un poste intermédiaire auquel il est relié.

Le poste central peut comporter en outre une mémoire-répertoire permettant la mémorisation d'une pluralité d'informations, lesdites informations pouvant être sélectionnées individuellement de façon à être incorporées dans le message lors de la saisie du message. Le poste central peut encore comporter une pluralité de touches programmées et/ou programmables, associées respectivement à une pluralité d'informations destinées à être transmises sélectivement aux postes périphériques et/ou intermédiaires. Il peut également comprendre un ordinateur personnel.

Le dispositif avertisseur du poste périphérique peut être lumineux et/ou sonore.

Le dispositif peut être combiné avec un central de communication domestique (PABX) destiné à aiguiller les communications téléphoniques et informatiques.

D'autres avantages et caractéristiques favorables du dispositif selon l'invention ressortiront plus clairement de la description de différentes formes d'exécution, donnée ci-après, et en se référant aux dessins sur lesquels :

La fig. 1 montre une vue schématique d'un exemple de poste central du dispositif de l'invention,

La fig. 2 montre une vue schématique d'un exemple de poste périphérique du dispositif de l'invention,

La fig. 3 montre le schéma d'un exemple de réseau du dispositif de l'invention,

La fig. 4 montre le schéma de principe d'un exemple de réalisation d'un poste d'émission-réception principal, et

La fig. 5 montre le schéma de principe d'un exemple de réalisation d'un poste de réception-émission périphérique.

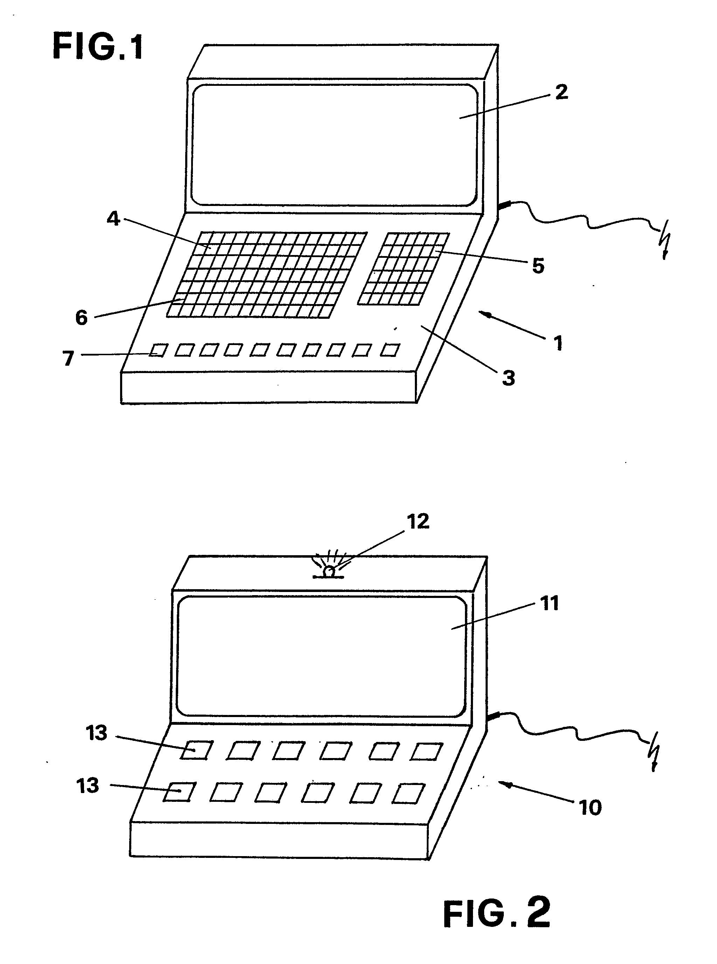

Le poste d'émission-réception central 1 représenté à la figure 1 comporte un écran 2 et un clavier 3 comportant des touches alphabétiques 4 et des touches numériques 5. L'écran et le clavier sont connectés à un processeur pour le traitement de l'information et à une mémoire de masse. Le clavier comprend également des touches 6 destinées à transmettre des informations programmées, telles que par exemple "très important", "urgent", "société", etc. Des touches 7 d'appel des postes périphériques et/ou intermédiaires sont disposées sur la partie avant du clavier. Le poste 1 peut comporter en outre une mémoire-répertoire comportant par exemple les noms de correspondants qui appellent régulièrement ainsi que d'autres informations très couramment utilisées, et que l'on n'a pas déjà à disposition en appuyant sur une des touches programmées. La sélection des informations contenues dans la mémoire-répertoire peut se faire à l'aide des touches du clavier, par exemple par la combinaison de différentes touches, selon des systèmes de mise en oeuvre bien connus par l'homme de l'art.

Selon une variante d'exécution du poste central (non représentée), pour sociétés nécessitant un grand nombre de postes périphériques, les touches d'appel 7 sont remplacées par un dispositif de sélection d'appel des postes périphériques plus perfectionné, analogue par exemple au dispositif de sélection d'un central téléphonique.

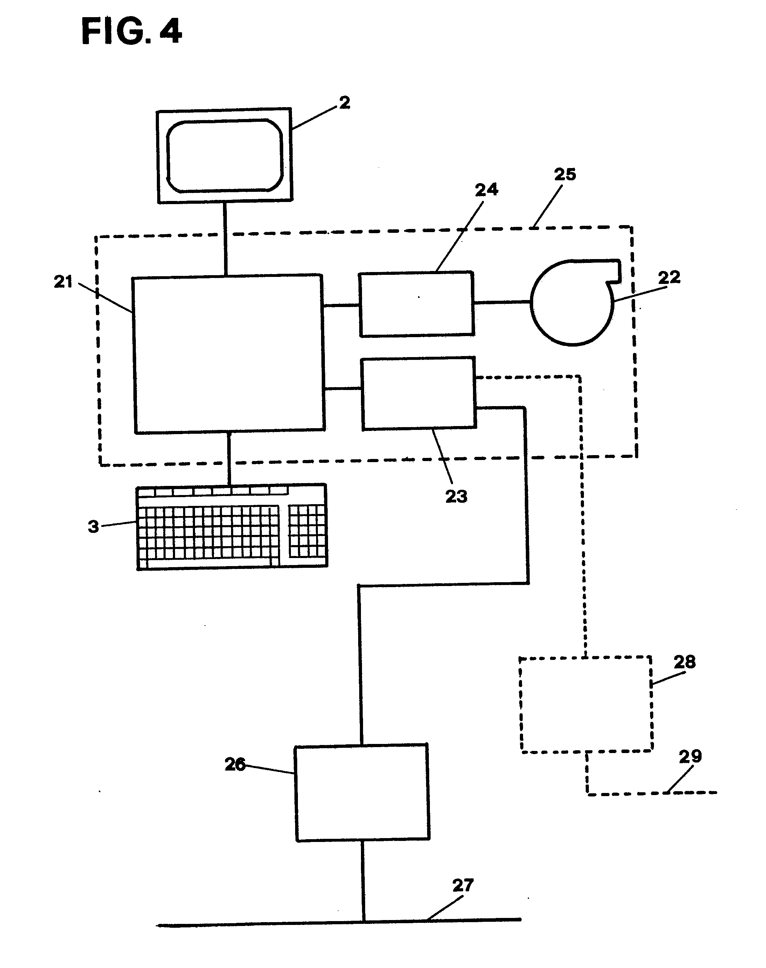

Un schéma de principe d'un poste d'émission-réception principal est représenté à la figure 4. Il comporte un écran 2, un clavier 3, une unité de traitement de l'information 25, telle que par exemple un ordinateur personnel (PC), comprenant un processeur 21 muni d'une mémoire, un contrôleur 24, une mémoire de masse 22 pour le stockage des messages préenregistrés, l'annuaire des récepteurs et autres informations, un interface série 23 à une ou deux lignes, connecté à un interface 26 de connexion au réseau subordonné 27 et à une source d'alimentation. L'interface série 23 peut être connecté à un second interface 28 de connexion au réseau maître 29, si le poste est un poste d'émission-réception intermédiaire.

Le poste de réception-émission périphérique 10 représenté à la figure 2 comprend un écran 11 destiné à l'affichage du message envoyé depuis le poste central ou depuis un poste intermédiaire. Un dispositif avertisseur, tel que par exemple un dispositif lumineux à clignotement 12, disposé bien en vue sur le poste périphérique se met à clignoter lorsqu'un appel est envoyé depuis le poste central ou depuis un poste intermédiaire. Dans une variante, l'avertisseur lumineux peut être remplacé ou complété par un avertisseur sonore dont l'intensité peut être réglable. Deux rangées de touches 13, disposées de façon à être facilement accessibles, sont destinées à la sélection et à l'envoi au poste central d'une réponse programmée, de façon à simplifier au maximum la manipulation. Sur l'exemple de la figure 2, chacune des deux rangées de touches comporte six touches. Les touches de la première rangée peuvent par exemple être programmées de la façon suivante :

    1ère touche : "Prenez son numéro"
    2ème touche : "Je rappelle"
    3ème touche : "Qu'il/elle attende un instant"
    4ème touche : "Qu'il/elle rappelle"
    5ème touche : "Prenez son message"
    6ème touche : "Passez-le/la à : " + touche de la seconde rangée, les touches de la seconde rangée pouvant être programmées de façon à indiquer respectivement le nom de six collaborateurs ou services dépendants du cadre concerné.

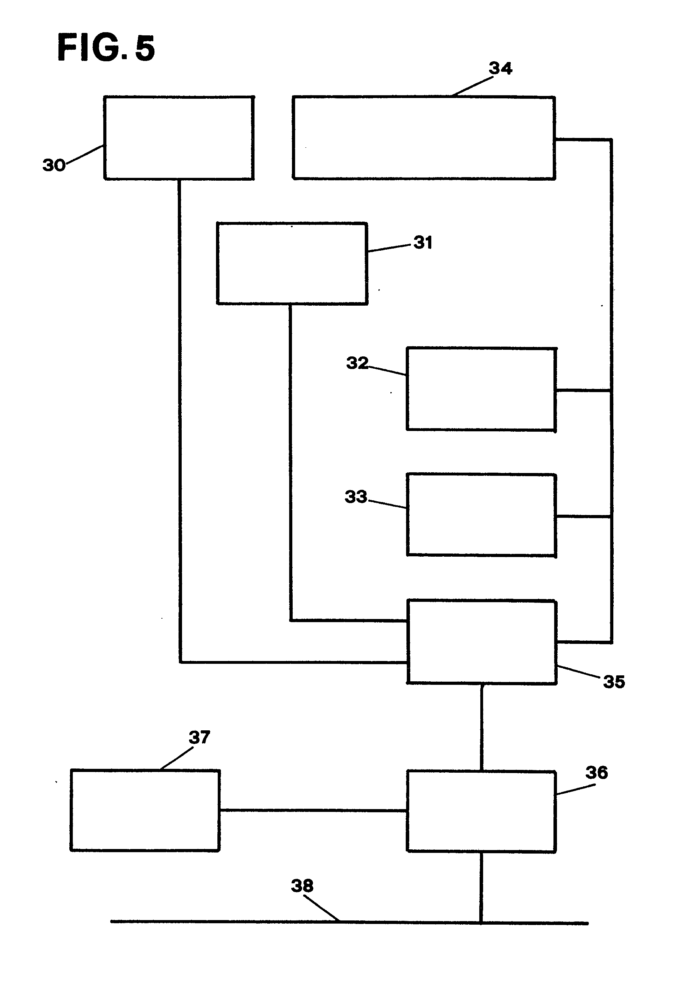

Un schéma de principe d'un poste de réception-émission périphérique est représenté à la figure 5. Il comporte un clavier 30, par exemple de 13 touches (dix pour les quittances, deux pour le défilement des messages sur l'écran et une touche de fonction pour les ordres de verrouillage, de déviation et d'effacement), un avertisseur 31 sonore et/ou lumineux, une mémoire EPROM 32, par exemple CMOS de 32 K, une mémoire SRAM 33 par exemple CMOS de 32 K, secourue par une pile au lithium pour conserver les messages préenregistrés des quittances, un écran 34, par exemple à affichage LCD de 4 lignes de 40 caractères, un microcontrôleur 35 et un interface-réseau 36, connecté d'une part à une alimentation 37 et au réseau de communication 38.

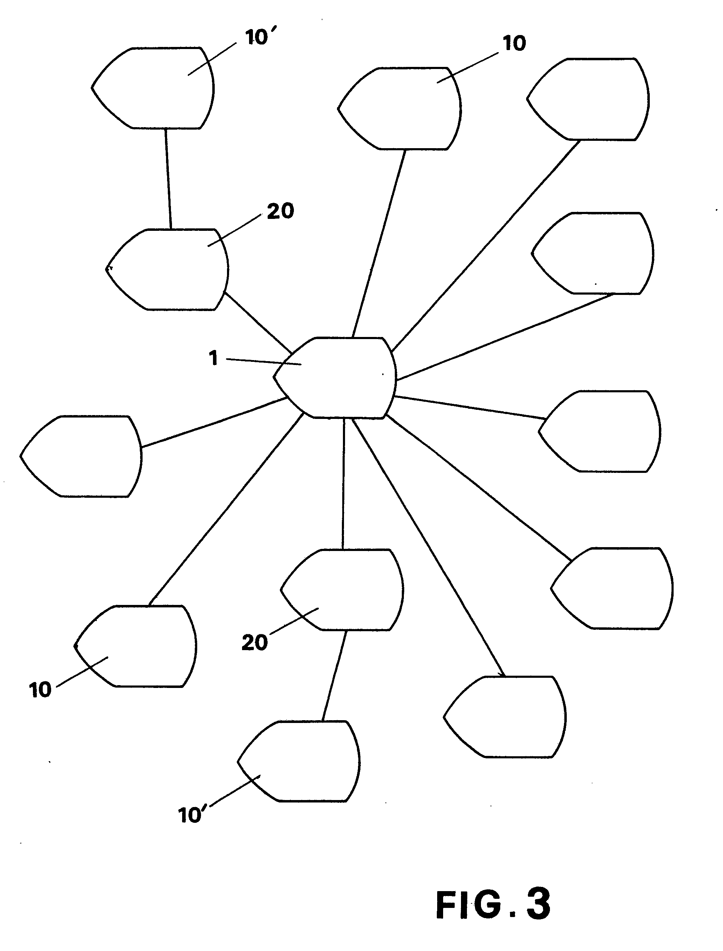

Un exemple de réseau réalisé à l'aide du dispositif de l'invention est représenté à la figure 3. Ce réseau comporte un poste central 1 et une dizaine de postes périphériques 10, 10'. Une partie des postes périphériques 10 sont reliés directement au poste central, d'autres postes périphériques 10' étant reliés à un poste intermédiaire 20 lui-même relié au poste central. Dans ce dernier cas, la transmission de l'information depuis le poste central peut se faire soit directement au poste périphérique si celui-ci est en position ouverte ou s'arrêter au poste intermédiaire si le poste périphérique est verrouillé.

Le poste d'émission-réception intermédiaire, qui peut par exemple être réservé à la secrétaire particulière du cadre peut être un poste identique à un poste central ou être simplifié.

Le dispositif fonctionne de la façon suivante. Lorsque la standardiste disposant du poste central reçoit un appel téléphonique venant de l'extérieur destiné à une personne disposant d'un poste périphérique et que cette personne est déjà en communication téléphonique, elle dactylographie les coordonnées de la personne qui appelle et les transmet au poste périphérique concerné en sélectionnant ce poste de la façon adéquate. Lors de la dactylographie ces coordonnées s'affichent sur l'écran de contrôle 2 du poste central et lorsque le poste périphérique est sélectionné, elles sont communiquées au poste périphérique et apparaissent sur l'écran 11 dudit poste périphérique. Le cadre est averti de l'affichage par le signal lumineux et/ou sonore et il peut prendre sa décision et la communiquer immédiatement au poste central en appuyant sur l'une ou plusieurs des touches programmées dont il dispose sur son poste périphérique.

Dans le cas particulier de l'exemple de la figure 5, lorsque le poste reçoit un message, celui-ci s'inscrit sur les deux lignes du haut de l'affichage. Si l'utilisateur désire envoyer une quittance le texte de celle-ci s'affiche sur la dernière ligne. Si plusieurs messages sont reçus simultanément, seul le dernier message est affiché. L'appareil signalera par un symbole que d'autres messages sont en attente. Les 15 derniers messages restent mémorisés, l'utilisateur peut les faire défiler sur son écran pour les lire ou les relire et quittancer les messages. Dès qu'un message est quittancé il est effacé de la mémoire. Dès que la mémoire est pleine la station est automatiquement verrouillée, dans ce cas l'expéditeur d'un message sera averti que le destinataire ne l'a pas reçu. L'utilisateur peut verrouiller volontairement sa station pour éviter d'être dérangé, il peut également donner l'ordre de dévier les messages vers une autre station.

Dans le cas où un poste intermédiaire est intercalé entre le poste périphérique et le poste central, lorsque le cadre disposant du poste périphérique l'a verrouillé, le système fonctionne alors entre le poste central et le poste intermédiaire. Le système peut également fonctionner entre le poste intermédiaire et le poste périphérique, le poste intermédiaire jouant alors le rôle de poste central.

Les postes du dispositif peuvent être exécutés en grandes ou petites dimensions, selon le type de personne à qui ils sont destinés. Selon un mode d'exécution pratique, la taille de l'écran, à affichage digital, peut être par exemple de vingt-six centimètres sur six centimètres et être agencé de façon à pouvoir contenir quatre lignes de vingt-quatre caractères.

Selon les cas, le dispositif peut être relié avec l'installation téléphonique, de façon que, par exemple, la secrétaire disposant du poste central soit informée par le poste central lui-même que le cadre concerné est déjà en conversation téléphonique. Une telle liaison permet également le verrouillage automatique du poste périphérique lorsque le cadre dévie son téléphone sur celui d'un de ses collaborateurs.

Indépendamment de sa complémentarité avec le téléphone, le dispositif de communication par affichage décrit ci-dessus représente une messagerie électronique sûre, silencieuse, de conception très simple et peu coûteuse, pouvant être réalisée à partir d'un nombre restreint d'éléments que l'on trouve couramment dans le commerce. Son installation est très facile. Il permet de donner aux messages un caractère confidentiel unique en son genre. En effet, avec ou sans touches correspondant à des messages programmés, la liaison de deux stations principales ou plus représente le système idéal de messagerie à très haut degré de confidentialité, puisque seul le regard peut violer le secret de la communication. La liaison et la communication entre les stations se feront de préférence par câble pour assurer la fiabilité de la transmission des messages. Dans les pays où le monopole public du téléphone le permet, la liaison et la communication peuvent se faire directement sur le câblage intérieur du réseau du téléphone.

Face à l'installation des centraux modernes de communication domestiques PABX (Private Automatic Branch Exchange), le dispositif ci-dessus représente une solution très simple et très peu coûteuse. En effet, les centraux PABX conduisent à des appareils de téléphone multifonctions complexes et compliqués qui peuvent entraîner des confusions et des irritations de la part des utilisateurs.

A cet égard, le dispositif de communication par affichage de l'invention constitue un complément aux centraux PABX, particulièrement utile par sa simplicité et son efficacité. Il peut avantageusement être combiné avec de tels centraux, l'appareil central de commutation dudit central étant complété par un clavier alphabétique et l'appareil périphérique d'un tel central étant muni d'un écran et des touches correspondant aux messages programmés. Le microcontrôleur du dispositif de l'invention et son progiciel pouvant incorporé ou adjoint à l'ordinateur de gestion du central PABX.

## Revendications

1. Dispositif de communication par affichage comportant au moins un poste d'émission-réception central (1) relié à au moins un poste de réception-émission périphérique (10, 10'), caractérisé en ce que le poste central comporte un écran d'affichage (2) et un clavier (3) à touches (4, 5, 6, 7) permettant la saisie d'un message, l'écran et le clavier étant connectés à un processeur pour le traitement de l'information et à une mémoire de masse, et en ce que le poste périphérique comporte un dispositif avertisseur (12), pouvant être actionné depuis le poste central, un écran (11) destiné à l'affichage du message envoyé depuis le poste central et une pluralité de touches (13) programmées et/ou programmables destinées à envoyer une réponse au poste central.

2. Dispositif selon la revendication 1, caractérisé en ce qu'il comporte au moins un poste d'émission-réception intermédiaire (20), comportant un écran d'affichage et un clavier à touches permettant la saisie d'un message, ledit poste intermédiaire étant relié d'une part au poste central et d'autre part à au moins un poste périphérique (10'), et étant destiné à fonctionner comme relais entre le poste central et le poste périphérique.

3. Dispositif selon l'une des revendications 1 ou 2, caractérisé en ce qu'il comporte une pluralité de postes périphériques reliés au poste central, le poste central comportant un dispositif de sélection d'appel (7) des postes périphériques et/ou intermédiaires.

4. Dispositif selon la revendication 3, caractérisé en ce que le poste périphérique comporte une touche de déviation destinée à dévier les appels qu'il reçoit sur un poste intermédiaire auquel il est relié.

5. Dispositif selon l'une des revendications précédentes, caractérisé en ce que le poste central comporte une mémoire-répertoire permettant la mémorisation d'une pluralité d'informations, et en ce que lesdites informations peuvent être sélectionnées individuellement de façon à être incorporées dans le message lors de la saisie du message.

6. Dispositif selon l'une des revendications précédentes, caractérisé en ce que le poste central comporte en outre une pluralité de touches programmées et/ou programmables, associées respectivement à une pluralité d'informations destinées à être transmises sélectivement aux postes périphériques et/ou intermédiaires.

7. Dispositif selon l'une des revendications précédentes, caractérisé en ce que le dispositif avertisseur du poste périphérique est lumineux.

8. Dispositif selon l'une des revendications précédentes, caractérisé en ce que le dispositif avertisseur du poste périphérique est sonore.

9. Dispositif selon l'une des revendications précédentes, caractérisé en que le poste central comprend un ordinateur personnel.

10. Dispositif selon l'une des revendications 1 à 8, caractérisé en ce qu'il est combiné avec un central de communication domestique (PABX) destiné à aiguiller les communications téléphoniques et informatiques.

# FIG.1

# FIG.2

**FIG.3**

# FIG. 4

# FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 075 426 (GOULD) <br> * En entier * | 1,3,10 | H 04 M 3/50 <br> H 04 M 3/62 |
| Y | | 2,4 | |
| | --- | | |
| Y | NACHRICHTEN TELEFONBAU UND NORMALZEIT, no. 86, 1984, pages 29-38, Dreieich, DE; E. FRERICHS et al.: "Die TN-Chefanlagen TC 40" <br> * Page 29, colonne du milieu, lignes 5-15; page 30, colonne de gauche, lignes 3-31, colonne de gauche, ligne 11 * | 2,4 | |
| | --- | | |
| A | ERICSSON REVIEW, vol. 61, no. ISDN, mai 1984, pages 14-19, Stockholm, SE; G. ERIKSSON et al.: "Voice and data workstations and services in the ISDN" <br> * Page 16, colonne de gauche, ligne 20 - page 17, colonne de gauche, ligne 8 * | 1,3,7,8 | |
| | --- | | |
| A | NATIONAL TELECOMMUNICATIONS CONFERENCE, Nouvelle Orléans, Louisiane, 29 novembre - 3 décembre 1981, vol. 3, pages F3.3.1 - F3.3.4, IEEE, New York, US; H.G. JUD et al.: "A modern integrated PABX with centralized message recording and remote distribution" <br> * Page 1, colonne de gauche, lignes 1-28; page 2, colonne de gauche, ligne 27 - colonne de droite, ligne 15 * <br> ---            -/- | 6,7 | **DOMAINES TECHNIQUES RECHERCHES (Int. Cl.4)** <br><br> H 04 M <br> H 04 Q <br> H 04 L |

Le présent rapport a été établi pour toutes les revendications

| Lieu de la recherche | Date d'achèvement de la recherche | Examinateur |
|---|---|---|
| LA HAYE | 25-01-1989 | VANDEVENNE M.J. |

Office européen
des brevets

**RAPPORT DE RECHERCHE EUROPEENNE**

Numero de la demande

EP 88 81 0752

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 7, no. 17 (E-154)[1162], 22 janvier 1983; & JP-A-57 174 969 (NIPPON DENSHIN DENWA KOSHA) 27-10-1982 <br> * Résumé * <br> --- | 1,3 | |
| A | EP-A-0 196 781 (KABUSHIKI) <br> * Page 3, ligne 1 - page 4, ligne 23; page 23, ligne 1 - page 24, ligne 3 * <br> --- | 1 | |
| A | DE-A-3 534 918 (SIEMENS) <br> * En entier * <br> ----- | 9 | |

DOMAINES TECHNIQUES RECHERCHES (Int. Cl.4)

Le présent rapport a été établi pour toutes les revendications

| Lieu de la recherche | Date d'achèvement de la recherche | Examinateur |
|---|---|---|
| LA HAYE | 25-01-1989 | VANDEVENNE M.J. |